# EUROPÄISCHE PATENTANMELDUNG

(11) **EP 0 811 482 A1**
(43) Veröffentlichungstag der Anmeldung: **10.12.1997**
(21) Anmeldenummer: 96810370.5
(22) Anmeldetag: 06.06.1996
(51) Int. Cl.: B32B 27/08, B32B 1/08, B65D 65/40

(54) **Mehrschichtiges Folienmaterial**

(71) Anmelder: Alusuisse Technology & Management AG, 8212 Neuhausen am Rheinfall (CH)
(72) Erfinder: Gerber, Manfred, 78224 Singen (DE)

(57) **Zusammenfassung**

Mehrschichtiges Folienmaterial (22) für die Herstellung eines Tubenrohres (21) einer Tube (17). Das Folienmaterial (22) enthaltet wenigstens eine Sperrschicht (10). Das Folienmaterial (22) weist eine Dicke (d) auf, die sich von der Aussenseite (14) des Tubenrohres (21) zur Innenseite (15) des Tubenrohres erstreckt. Wenigstens eine Sperrschicht (10) ist innerhalb eines Abstandes (a) von der Innenseite (15) des Tubenrohres (21) her angeordnet. Der Abstand (a) beträgt 5 bis 40%, bezogen auf die Gesamtdicke (d) von 100%.

Das Folienmaterial, angewendet an einer Tube, weist demzufolge eine der Tubeninnenseite und damit auch dem Tubeninhalt naheliegende Sperrschicht auf. Flüchtige Bestandteile des Tubeninhaltes können im wesentlichen nur bis zur Sperrschicht vordringen und können sich nicht in anderen dicken Wandschichten anreichern.

## Beschreibung

Vorliegende Erfindung betrifft ein mehrschichtiges Folienmaterial für das Tubenrohr einer Tube, enthaltend wenigstens eine Sperrschicht, wobei das Folienmaterial eine Dicke d aufweist, die sich von der Aussenseite des Tubenrohres zur Innenseite des Tubenrohres erstreckt.

Von der Firma SOLVAY sind dreischichtige Kunststoff-Folien unter dem Namen CLARENE ®-Verbund für Tubenrohre bekannt, bestehend aus einem LDPE/EVOH/LDPE-Verbund. Der EVOH ist eine sperrend wirkende Mittelschicht Eine derartige Ausführungsform eines Tubenrohres ist für viele Anwendungen bezüglich seiner Eigenschaften gegenüber flüchtigen Aromabestandteilen hinreichend.

Nachteilig kann jedoch -- wie bei allen Tubenrohren aus Kunststoff -- die Einwanderung von Aromastoffen oder Aromabestandteilen in die Kunststoffschichten sein.

Aufgabe vorliegender Erfindung ist es, diesen Nachteil zu überwinden und Tubenrohre für Tuben zur Verfügung zu stellen, welche die Menge an in den Kunststoff eingewanderten Aromastoffe oder Aromabestandteile minimiert.

Erfindungsgemäss wird dies dadurch erreicht, dass im mehrschichtigen Folienmaterial 22 wenigstens eine Sperrschicht 10 in einem Abstand a von 5 bis 40%, bezogen auf die Gesamtdicke d von 100%, von der Innenseite 15 des Tubenrohrs 21 her, angeordnet ist.

In zweckmassiger Ausführungsform wird dies dadurch erreicht, dass im mehrschichtigen Folienmaterial 22 wenigstens eine Sperrschicht 10 in einem Abstand a von 10 bis 40%, vorzugsweise von 10 bis 30%, bezogen auf die Gesamtdicke d von 100%, von der Innenseite 15 des Tubenrohrs 21 her, angeordnet ist.

Die Sperrschicht 10 besteht aus Kunststoffen oder enthält Kunststoffe und zweckmässig enthält die Sperrschicht 10 überwiegend Polymere oder Copolymere des Ethylvinyl-Alkohols oder die Sperrschicht 10 besteht aus Polymeren oder Copolymeren des Ethylvinyl-Alkohols (auch als EVOH oder EVAL bezeichnet).

In anderer vorteilhafter Ausführungsform enthält das erfindungsgemässe mehrschichtige Folienmaterial 22 zwei Sperrschichten 10, die innerhalb eines Abstandes a von 5 bis 40%, bezogen auf die Gesamtdicke d von 100%, von der Innenseite 14 des Tubenrohrs 21 her, angeordnet sind.

Neben diesen erfindungsgemässen Sperrschichten 10, die innerhalb des Abstandes a angeordnet sind, kann das Folienmaterial auch eine zweite oder dritte usw. Sperrschicht aufweisen, wobei solche weiteren Sperrschichten ausserhalb des Abstandes a und -- bezogen auf die Dicke d -- auch in einem Bereich näher der Aussenseite des Tubenrohres liegen können.

Die Sperrschicht 10 kann beispielsweise Teil eines Vorlaminates, wie ein Folienlaminat aus einer mittleren Sperrschicht und beidseitig daran angebrachten Deckschichten sein.

Als Vorlaminat kann auch ein Folienlaminat, enthaltend z.B. zwei Sperrschichten, angewendet werden. Der Aufbau eines derartigen Folienlaminates kann z.B. nacheinander eine Deckschicht, eine Sperrschicht, eine Zwischenschicht, eine Sperrschicht und eine weitere Deckschicht enthalten.

Die Dicke der Sperrschichten kann z.B. 5 bis 25 µm betragen.

Die Dicke der Deckschichten und allfälliger Zwischenschichten kann z.B. 10 bis 150 µm, vorzugsweise 20 bis 60 µm und insbesondere 50 µm betragen.

Die Deckschichten und eine allfällige Zwischenschicht des Vorlaminates können aus thermoplastischen Kunststoffen gefertigt sein, wobei Polyolefine bevorzugt sind. Unter den Polyolefinen sind wiederum die Polyethylene und die Polypropylene besonders geeignet. Beispiele für die Polyethylene sind die Polyethylene niedriger Dichte (LDPE), die linearen Polyethylene niedriger Dichte (LLDPE), die Polyethylene mittlerer Dichte (MDPE), die linearen Polyethylene mittlerer Dichte (LMDPE) und die Polyethylene hoher Dichte (HDPE) Dichte. Besonders bevorzugt sind die Polyethylene mittlerer Dichte (MDPE) und insbesondere die linearen Polyethylene mittlerer Dichte (LMDPE).

Die Sperr-, Deck- und allfälligen Zwischenschichten des Vorlaminates können beispielsweise mittels Haftvermittlern und/oder Kaschierschichten, resp. -klebern gegenseitig aneinander festgelegt werden oder können durch Exrusionsbeschichten gegenseitig verbunden werden.

Das mehrschichtige Folienmaterial nach vorliegender Erfindung kann derart ausgestaltet sein, dass die Sperrschicht oder die Sperrschichten als benachbarte Schichten Polyolefinschichten und vorzugsweise Polyethylen- oder Polypropylenschichten aufweisen.

Das Vorlaminat kann zum erfindungsgemässen mehrschichtigen Folienmaterial verarbeitet werden. Beispielsweise kann auf einer Seite des Vorlaminates eine Aussenfolie in einer Dicke von 100 bis 200 µm über eine 30 bis 90 µm, zweckmässig 40 bis 80 µm und bevorzugt 60 µ m dicke Kaschierung mittels eines Kaschierschicht und insbesondere einer polyethylenhaltigen Kaschierschicht festgelegt werden.

Die Aussenfolie kann eine Monofolie oder ein Folienverbund sein. Die Monofolie oder der Folienverbund der Aussenfolie kann aus thermoplastischen Kunststoffen gefertigt sein, wobei Polyolefine bevorzugt werden. Aus der Reihe der Polyolefine sind die Polyethylene und die Polypropylene bevorzugt und Beispiele für die Polyethylene sind die Polyethylene niedriger Dichte (LDPE), die linearen Polyethylene niedriger Dichte (LLDPE), die Polyethylene mittlerer Dichte (MDPE), die linearen Polyethylene mittlerer Dichte (LMDPE) und die Polyethylene hoher Dichte (HDPE) Dichte. Besonders bevorzugt sind Polyethylene mittlerer (MDPE) und hoher (HDPE) Dichte.

Beispiele von Aussenfolienverbunden weisen Schichtaufbauten von 33 µm Polyethylen mittlerer Dichte (MDPE), 64 µm Polyethylen hoher Dichte (HDPE) und 33 µm MDPE aus oder weisen einen Schichtaufbau von 25µm MDPE, 50 µm HDPE und 25 µm MDPE auf.

Zumindest die Aussenseite der Aussenfolie und damit die nach aussen weisende Oberfläche des Tubenrohres ist vorteilhaft siegelbar. Dies kann z.B. dadurch erreicht werden, dass wenigstens die äussere Oberfläche bildende Aussenfolie des Tuberrohres siegelbare Eigenschaften aufweisen oder dass als eine oberste Schicht, welche die äussere Oberfläche bildet, ein Siegellack aufgetragen wird.

Das Vorlaminat und die Aussenfolie können durch Kaschierung oder Coextrusion aneinander festgelegt sein. Besonders vorteilhaft gestaltet sich die Herstellung vorliegender Folienmaterialien dadurch, dass das Vorlaminat und die Aussenfolie vorgefertigt sein können und beispielsweise eine Handelsware sein können. Durch kaschieren des Vormaterials gegen die Aussenfolie kann das erfindungsgemässe Folienmaterial, vorzugsweise in einem Arbeitsgang, erzeugt werden.

Am derart vorbereiteten Folienmaterial aus Vorlaminat und Aussenfolie weist das Vorlaminat noch eine freie Seite auf. In der Regel werden an dieser noch freien Seite des Vorlaminates, im Rahmen der weiteren Verwendung des Folienmaterials, Siegelungen vorgenommen. Falls die freie Seite des Vorlaminates selbst keine oder ungenügende Siegeleigenschaften aufweist, so kann auf der noch freien Seite des Vorlaminates eine Siegelschicht, wie eine siegelbare Folie aufgebracht werden. Das Festlegen der siegelbaren Folie kann beispielsweise durch kaschieren erfolgen. Die siegelbare Folie kann eine Dicke von beispielsweise 15 bis 70 µm aufweisen und kann aus Polyolefinen, wie Polyethylenen bestehen oder diese enthalten.

Die Gesamtdicke des erfindungsgemässen Folienmaterials kann beispielsweise 250 bis 450 µ m betragen, wobei Gesamtdicken von 280 bis 350 µm bevorzugt und Gesamtdicken von 300 bis 320 µm vorteilhaft sind. Jeweils entsprechend der aktuellen Dicke des Folienmaterials befindet sich wenigstens eine Sperrschicht -- gemessen von der freien Oberfläche der innenliegenden Schicht, d.h. von der Seite, die an einer Verpackungstube zum Innenraum weist --innerhalb eines Abstandes a von 5 bis 40%, bezogen auf die Gesamtdicke d von 100%, woraus sich Abstände a von wenigstens 12,5 bis 22,5 µm und höchstens 100 bis 180 µm, bevorzugt wenigstens von 14 bis 17,5 µm und höchstens 112 bis 140 µm und vorteilhaft wenigstens 15 bis 16 µm und höchstens 120 bis 128 µm errechnen.

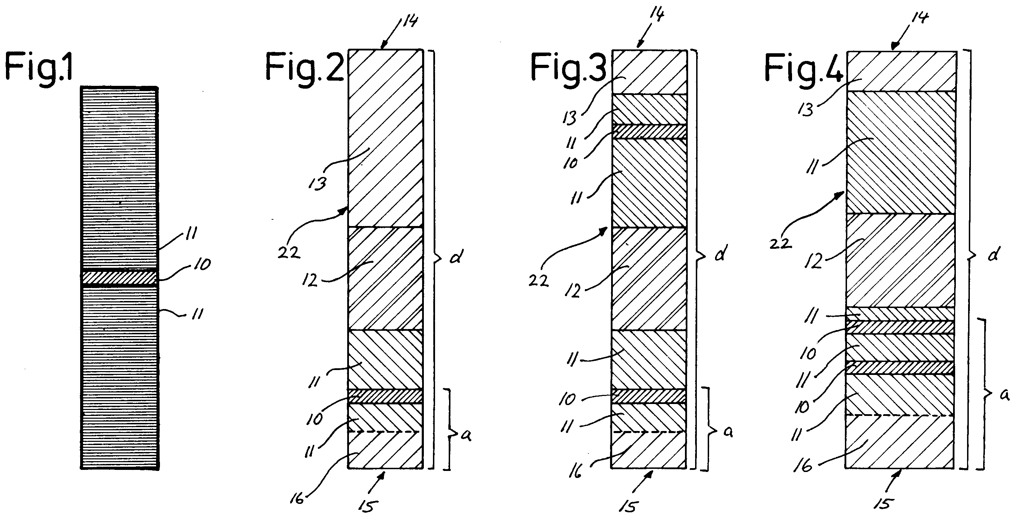

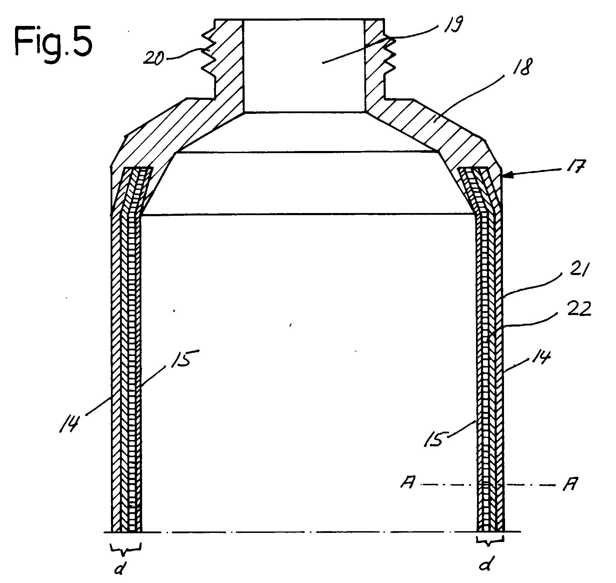

Die Figuren 1 bis 5 erläutern vorliegende Erfindung beispielhaft weiter. Die Figur 1 zeigt einen Schichtaufbau eines Folienverbundes nach dem Stand der Technik, die Figuren 2 bis 4 zeigen mehrschichtiges Folienmaterial nach vorliegender Erfindung und Figur 5 zeigt einen Teil einer Tube 17 und die Anordnung des mehrschichtigen Folienmaterials 22 als Tubenrohr 21.

Gemäss Figur 1 ist eine Sperrschicht 10 aus Ethylvinyl-Alkohol mit Polyethylenfolien (LDPE) 11 beschichtet. Die Sperrschicht ist zentral angeordnet und von verhältnismässig dicken Kunststoffschichten umgeben. Die flüchtigen Inhaltsstoffe, wie Feuchtigkeit, Aromastoffe, Duftstoffe etc. können in die Kunststoffschicht bis wenigstens zur Sperrschicht migrieren oder diffundieren. Zur Herstellung eines solchen Folienverbundes sind wenigstens zwei Kaschiervorgänge vorzusehen, nämlich ein erster Kaschiervorgang zur Beschichtung der einen Seite der Sperrschicht und ein zweiter Kaschiervorgang zur Beschichtung der anderen Seite der Sperrschicht.

In den Figuren 2 bis 5 ist die nach aussen weisende Seite oder Aussenseite des mehrschichtigen Folienmaterials 22 mit der Ziffer 14 und die nach innen weisende Seite oder Innenseite des mehrschichtigen Folienmaterials 22 mit Ziffer 15 bezeichnet. Die Gesamtdicke ist mit d, der Abstand der Sperrschicht 10 von der Innenseite 15 des Tubenrohrs her, mit a bezeichnet.

Zu den besonders bevorzugten Folienmaterialien 22 nach vorliegender Erfindung gehören z.B. solche des Aufbaus gemäss Figur 2:
a) siegelbare Polyethylenschicht 13 in einer Dicke von 80 bis 180 µm
b) Kaschierung 12 in einer Dicke von 40 bis 80 µm
c) Polyethylenschicht 11 in einer Dicke von 50 bis 70 µm
d) Ethylvinyl-Alkohol-Folie 10 in einer Dicke von 5 bis 25 µm
e) Polyethylenschicht 11 in einer Dicke von 50 bis 70 µm
f) siegelbare Polyethylenschicht 16 in einer Dicke von 15 bis 70 µm,
wobei die Schicht a) die Aussenfolie und damit bei einem Tubenrohr nach aussen weisende Seite 14 und die Schicht f) die zum Tubeninnenraum weisende Seite 15 bildet und die Schichten c), d) und e) zusammen das separat gefertigte Vorlaminat darstellen können. In diesem Vorlaminat stellen die Schichten c) und e) mit f) die Deckschichten und die Schicht d) die Sperrschicht dar.

Weitere bevorzugte Folienmaterialien haben den Aufbau gemäss Figur 3:
a) siegelbare Polyethylenschicht 13 in einer Dicke von 20 bis 70 µm
b) Polyethylenschicht 11 in einer Dicke von 50 bis 80 µm
c) Ethylvinyl-Alkohol-Folie 10 in einer Dicke von 5 bis 15 µm
d) Polyethylenschicht 11 in einer Dicke von 20 bis 80 µm
e) Kaschierung 12 in einer Dicke von 40 bis 80 µm
f) Polyethylenschicht 11 in einer Dicke von 50 bis 70 µm
g) Ethylvinyl-Alkohol-Folie 10 in einer Dicke von 5 bis 25 µm
h) Polyethylenschicht 11 in einer Dicke von 50 bis 70 µm
i) siegelbare Polyethylenschicht 16 in einer Dicke von 30 bis 100 µm,
wobei die Schicht a) die bei einem Tubenrohr nach aussen weisende Seite 14 und die Schichten a), b), c) und d) die Aussenfolie bilden und die Schicht i) die zum Tubeninnenraum weisende Seite 15 bildet und die Schichten f), g) und h) mit i) zusammen ein separat gefertigtes Vorlaminat darstellen können. In diesem Vorlaminat stellen die Schichten f) und h) mit i) die Deckschichten und die Schicht g) die Sperrschicht dar. Die Aussenfolie mit den Schichten a), b), c) und d) weist demnach einen dem Vorlaminat nicht unähnlichen Aufbau auf. Die Aussenfolie enthält eine weitere Sperrschicht, d.h. in vorliegendem Folienmaterial eine zweite Sperrschicht.

Ein gegenüber obengenanntem Folienmaterial weiterentwickeltes Folienmaterial kann folgenden Schichtaufbau enthalten:
a) siegelbare Polyethylenschicht in einer Dicke von 20 bis 100 µm
b) Polyethylenschicht in einer Dicke von 50 bis 80 µm
c) Ethylvinyl-Alkohol-Folie als Sperrschicht in einer Dicke von 5 bis 25 µm
d) Polyethylenschicht in einer Dicke von 20 bis 80 µm
e) Kaschierung in einer Dicke von 40 bis 80 µm
f) Polyethylenschicht in einer Dicke von 20 bis 80 µm
g) Ethylvinyl-Alkohol-Folie als Sperrschicht in einer Dicke von 5 bis 25 µm
h) Polyethylenschicht in einer Dicke von 50 bis 80 µm
i) siegelbare Polyethylenschicht in einer Dicke von 20 bis 100 µm.

Dieses Folienmaterial weist vorteilhaft einen spiegelsymmetrischen Aufbau auf, wobei die Kaschierung e) die Mittelschicht bildet Es gelingt damit durch mittiges umfalten eines Vormaterials und kaschieren der sich gegenüber zu liegend kommenden Seiten des Vormaterials ein erfindungsgemässes Folienmaterial zu erhalten. Es handelt sich dabei um eine sogenant geblocktes Folienmaterial. Entsprechend kann anstelle der Schichten a) und b), resp. h) und i) jeweils eine einzelne siegelfähige Polyethylenschicht in einer Dicke von 20 bis 180 µm verwendet werden.

Ein weiteres bevorzugtes Folienmaterial kann den Aufbau nach Figur 4 aufweisen:
a) siegelbare Polyethylenschicht 13 in einer Dicke von 20 bis 70 µm
b) Polyethylenschicht 11 in einer Dicke von 90 bis 180 µm
c) Kaschierung 12 in einer Dicke von 40 bis 80 µm
d) Polyethylenschicht 11 in einer Dicke von 30 bis 100 µm
e) Ethylvinyl-Alkohol-Schicht 10 in einer Dicke von 5 bis 25 µm
f) Polyethylenschicht 11 in einer Dicke von 30 bis 80 µm
g) Ethylvinyl-Alkohol-Folie 10 in einer Dicke von 5 bis 25 µm
h) Polyethylenschicht 11 in einer Dicke von 30 bis 45 µm
i) siegelbare Polyethylenschicht 16 in einer Dicke von 30 bis 100 µm,
wobei die Schicht a) die bei einem Tubenrohr nach aussen weisende Seite 14 und die Schicht i) die zum Tubeninnenraum weisende Seite 15 bildet und die Schichten d), e), f), g), h) und i) zusammen ein separat gefertigtes Vorlaminat darstellen können. In diesem Vorlaminat stellen die Schichten d) und h) mit i) die Deckschichten, die Schicht f) die Zwischenschicht und die Schicht e) und g) die Sperrschichten dar.

Bei der nach innen weisenden Seite 15 der Schicht f) gemäss Figur 3, resp. i) gemäss Figur 4, aus siegelbarem Polyethylen, kann anstelle des Polyethylens auch ein Polypropylen angewendet werden.

Bei der nach innen weisenden Seite 15 der Schicht f) gemäss Figur 3, resp. i) gemäss Figur 4, aus siegelbarem Polyethylen oder Polypropylen, kann es sich um Folien handeln.

In den oben angeführten Beispielen können als Schichten beispielsweise auch Folien eingesetzt werden. Zwischen den einzelnen Schichten, wie den Folien der Aussenfolie und/oder den Aussenfolien und den Vorlaminaten und/oder zwischen den Folien der Vorlaminate kann ein Haftvermittler angewendet werden.

Die einzelnen Folien unter sich oder die Aussenfolie und das Vorlaminat können durch Kaschieren oder Coextrudieren, oder alle Folien gleichzeitig in einem Arbeitsgang können durch Coextrudieren, zu den vorliegenden Folienmaterialien gefügt werden. Weist das Folienmaterial einen spiegelsymmetrischen Aufbau auf, wobei die Kaschierung die Mittelschicht bildet, so gelingt dies durch, vorzugsweise mittiges, umfalten eines Vormaterials und kaschieren der sich gegenüber zu liegend kommenden Seiten des Vormaterials.

Die Figur 5 zeigt einen Teil einer Tube 17, mit einem Schulterteil 18 und einer mit einem Gewinde 20 versehenen Ausgabeöffnung 19. Der Schulterteil 18 ist mit dem Tubenrohr 21 trennfest und dicht verbunden. Das Tubenrohr 21 aus mehrschichtigem Folienmaterial 22 hat zwei Oberflächen, wobei eine Oberfläche die nach aussen weisende Seite 14 des Tubenrohres und die andere Oberfläche die nach innen weisende Seite 15 ist. Das mehrschichtige Folienmaterial 22 hat die Dicke d. In den Figuren 2 bis 4 ist der Schichtaufbau entlang eines Schnittes gemäss der Linie A-A gezeigt.

Das mehrschichtige Folienmaterial nach vorliegender Erfindung kann für Tubenrohre von Tuben zum Verpacken von beispielsweise kosmetischen oder pharmazeutischen Erzeugnissen, von Erzeugnissen zur Körperpflege und von Nahrungs-, Lebens- und Genussmitteln verwendet werden.

Das vorliegende Folienmaterial und insbesondere daraus hergestellte Tuben haben den Vorteil, dass flüchtige Stoffe des Tubeninhaltes, beispielsweise Aromastoffe oder Feuchtigkeit nur relativ dünne Kunststoffschichten durchwandern können, bis sie von der Sperrschicht aufgehalten werden. Folienmaterial nach vorliegender Erfindung mit mehr als einer Sperrschicht hat weitere Vorteile. Die Feuchtigkeit beeinflusst die Wirkung der Sperrschichten. Wird beispielsweise die durch das Folienmaterial diffundierende Feuchtigkeit in der ersten Sperrschicht aufgehalten und schwächt sich durch die Feuchtigkeit die Sperrwirkung z.B. für Gase ab, so kann die zweite Sperrschicht ergänzend wirken. Insgesamt gelingt es, eine hohe Sperrwirkung gegenüber dem Tubeninhalt zu erreichen und die Menge an aus dem Tubeninhalt heraus diffundierenden Bestandteilen klein zu halten. Im weiteren kann das vorliegende Folienmaterial auf einfache Weise aus Vorlaminat und Aussenfolie in einem Arbeitsgang gefertigt werden.

## Patentansprüche

1. Mehrschichtiges Folienmaterial (22) für das Tubenrohr (21) einer Tube (17), enthaltend wenigstens eine Sperrschicht (10), wobei das Folienmaterial (22) eine Gesamtdicke (d) aufweist, die sich von der Aussenseite (14) des Tubenrohres (21) zur Innenseite (15) des Tubenrohres erstreckt,
dadurch gekennzeichnet, dass
wenigstens eine Sperrschicht (10) in einem Abstand (a) von 5 bis 40%, bezogen auf die Gesamtdicke (d) von 100%, von der Innenseite (15) des Tubenrohres (21) her, angeordnet ist.

2. Mehrschichtiges Folienmaterial nach Anspruch 1,
dadurch gekennzeichnet, dass
im mehrschichtigen Folienmaterial (22) wenigstens eine Sperrschicht (10) in einem Abstand (a) von 10 bis 40%, vorzugsweise von 10 bis 30%, bezogen auf die Gesamtdicke (d) von 100%, von der Innenseite (15) des Tubenrohrs (21) her, angeordnet ist.

3. Mehrschichtiges Folienmaterial nach Anspruch 1,
dadurch gekennzeichnet, dass
zwei Sperrschichten (10) innerhalb des Abstandes (a) von 5 bis 40%, bezogen auf die Gesamtdicke (d) von 100%, von der Innenseite (15) des Tubenrohrs her, angeordnet sind.

4. Mehrschichtiges Folienmaterial nach Anspruch 1,
dadurch gekennzeichnet, dass
die Sperrschicht (10) überwiegend Polymere oder Copolymere des Ethylvinyl-Alkohols enthält oder daraus besteht.

5. Mehrschichtiges Folienmaterial nach Anspruch 1,
dadurch gekennzeichnet, dass
die Sperrschicht (10) oder die Sperrschichten (10) als benachbarte Schichten (11) Polyolefinschichten und vorzugsweise Polyethylenschichten oder Polypropylenschichten aufweisen.

6. Verfahren zur Herstellung eines mehrschichtigen Folienmaterials nach Anspruch 1,
dadurch gekennzeichnet, dass
alle Schichten des Folienmaterials gleichzeitig in einem Arbeitsgang durch Coextrudieren erzeugt und unmittelbar zum Folienmaterial gefügt werden.

7. Verfahren zur Herstellung eines mehrschichtigen Folienmaterials nach Anspruch 1,
dadurch gekennzeichnet, dass
ein Vorlaminat erzeugt wird, das Vorlaminat vorzugsweise mittig, umgefaltet wird und die sich gegenüber zu liegend kommenden Seiten des Vormaterials gegeneinander kaschiert werden.

8. Verwendung des mehrschichtigen Folienmaterials nach Anspruch 1 für Tubenrohre (21) von Tuben (17) für kosmetische oder pharmazeutische Erzeugnisse oder Erzeugnisse zur Körperpflege.
